# EUROPEAN PATENT APPLICATION

(11) **EP 4 697 074 A1**
(43) Date of publication of application: **18.02.2026**
(21) Application number: 25192192.0
(22) Date of filing: 28.07.2025
(51) Int. Cl.: G02B 7/182, G02B 23/00

(54) **LOW-OBSCURE REFLECTOR TELESCOPE, LOW-OBSCURE REFLECTOR ASSEMBLY TO BE USED IN SUCH TELESCOPE AND USE OF SUCH REFLECTOR ASSEMBLY IN A REFLECTOR TELESCOPE**

(30) Priority: 31.07.2024 IT 202400017926
(71) Applicant: Officina Stellare S.p.A., 36030 Sarcedo (VI) (IT)
(72) Inventor: BARTOLOMEI, Mirco, 36056 Tezze Sul Brenta (VI) (IT)
(74) Representative: Autuori & Partners S.R.L.

(57) **Abstract**

A reflecting assembly which can be used in a reflecting telescope comprising a primary mirror (M1) and a secondary mirror (M2) spaced apart and substantially coaxial along an optical axis (X), the reflecting assembly being designed to be arranged between the primary mirror (M1) and the secondary mirror (M2) to deflect the rays coming from the latter along an axis (**Y**) substantially perpendicular to the optical axis (X). The reflecting assembly has an extension along a main axis (X') and being designed to be fixed to a platform (8) so that the main axis (X') is coaxial with the optical axis (X). The reflecting assembly (10) comprises a flat mirror (20) defining a reflecting plane (**π'**) designed to remain transversal to the main axis (X') to intercept the rays coming from the secondary mirror (M2) and a structure (30) for supporting the flat mirror (20) designed to be fixed with the platform (8). The mirror (20) has a flat circular-shaped reflecting upper face (21), the latter defining the reflecting plane (**π'**), there being provided for a median axis (**Y1**) passing through the centre of the upper face (21) and designed to remain in use perpendicular to the main axis (X') said support structure (30) being configured to rotate the reflecting plane (**π'**) with respect to the median axis (**Y1**).

## Description

### Field of the invention

The present invention generally relates to the technical field of reflecting telescopes, and it particularly relates to a reflecting telescope for use in laser communication, observation or the like. The invention also relates to a reflecting assembly which can be used in a reflecting telescope and the use of such reflecting assembly in a reflecting telescope.

### State of the Art

In the field of optical communications, it is known that the ground telescope installed in the optical station for the communication with a laser transceiver for example on board a space probe should minimise optical leakage caused by the same.

Such assumption applies even more to quantum applications (*Quantum Key Distribution*)*,* in which communication occurs for an individual photon, that is to each photon there correspond data and information to be received and/or transmitted.

A typical ground telescope used in the applications mentioned above, are reflecting telescopes and, in particular, the telescope with the *Ritchie-Chrétien* optics. Such configuration provides for two non-spherical mirrors arranged along the optical axis of the telescope, that is a primary mirror designed to collect the light to convey it towards the fire and a secondary mirror designed to redirect the optical beam towards the primary mirror correcting the aberrations thereof.

In order to laterally divert the rays towards the instruments installed on the arms of the telescope frame, there is usually used a further mirror inclined by 45°.

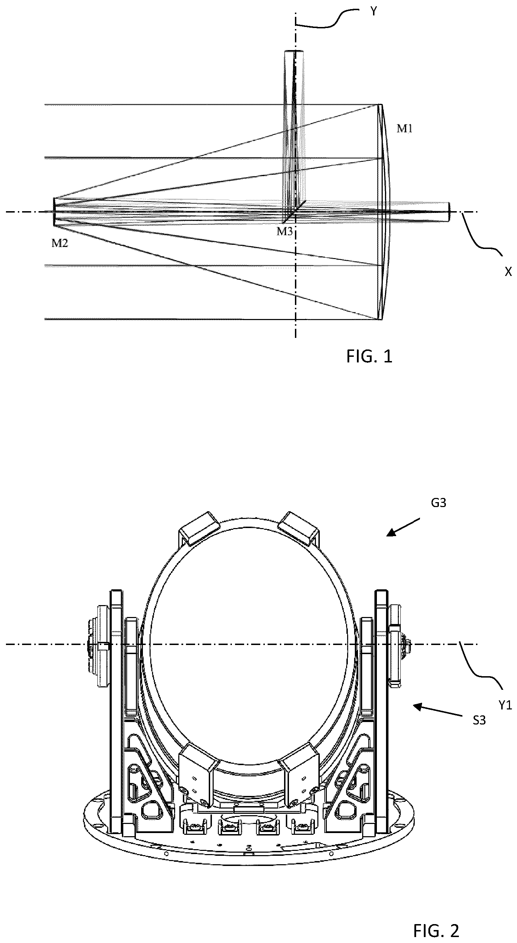

For example, FIG. 1 shows a reflecting telescope with *Ritchey-Chrétien* scheme which provides for the primary mirror **M1,** the secondary mirror **M2** and the inclined flat mirror **M3** to deflect the rays.

The reflecting assembly **G3** comprising the mirror **M3** and the respective support structure **S3** thereof is positioned in front of the primary mirror **M1** and obscures the area thereof reducing the ability thereof to collect the light and therefore jeopardising the effectiveness of the telescope.

The mirror **M3** should be adjustable and at the same time it should be held stably in position and at the correct distance between the mirrors **M1** and **M2.** Therefore, the support structure **S3** of the prior art reflecting assemblies **G3** has large overall dimensions on the lateral support arms, for example as shown in FIG. 2.

A drawback of such telescopes which use the prior art reflecting assemblies **G3** therefore lies in having a large area for obscuring the mirror **M1** and as a result a reduced effectiveness of the telescope.

A further drawback of the prior art lies in using a pair of electric motors and means for the synchronisation thereof resulting in a large weight of the whole assembly **G3.**

### Summary of the invention

An object of the present invention is to at least partly overcome the drawbacks illustrated above by providing a reflecting telescope that is particularly efficient and cost-effective.

Another object of the invention is to provide a reflecting telescope that allows to maximise the information received and/or transmitted.

A further object of the present invention is to provide a reflecting assembly that has small overall dimensions which can be used in a reflecting telescope.

Another object of the present invention is to provide a reflecting assembly that is easy to adjust and which can be used in a reflecting telescope.

Another object of the present invention is to provide a reflecting assembly that has high rigidity and which can be used in a reflecting telescope.

Another object of the present invention is to provide a reflecting assembly which can be used in a reflecting telescope which provides for a reduced number of components.

These and other objects which will be more apparent hereinafter, are attained by a telescope and a reflecting assembly which can be used in such telescope as described, illustrated and/or claimed herein.

The dependent claims define advantageous embodiments of the invention.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
**FIG. 1** is a diagram of a reflecting telescope with a *Ritchie-Chrétien* optical scheme of the known type which comprises a primary mirror **M1,** a secondary mirror **M2** and a deviator mirror **M3;**
**FIG. 2** is a front view of a reflecting assembly **G3** of the prior art which comprises a support structure **S3** and the mirror **M3;**
**FIG. 3** is a schematic view of an embodiment of a reflecting assembly **10** with a flat mirror **20** and support structure **30;** **FIG. 4** is a schematic view of the reflecting assembly **10** of FIG. 3 which schematically shows the rotation of the flat mirror **20** around an axis **Y1**;
**FIG. 5** is a schematic view of a different embodiment of a reflecting assembly **10** with a flat mirror **20** and support structure **30;** **FIG. 6** is a schematic view of the reflecting assembly **10** of FIG. 5 which schematically shows the rotation of the flat mirror **20** around an axis **Y1**;
**FIG. 7** and **FIG. 9** are respectively rear and front axonometric views of a reflecting assembly **10** in which the support structure **30** has the operational diagram shown in FIG. 5, with FIG. 8 showing an axonometric view of some details of the same embodiment of the reflecting assembly **10** which show the means **40;**
**FIG. 10** is a lateral view of the reflecting assembly **10** of FIG. 7;
**FIG. 11** is a front schematic view of the reflecting assembly **10** of FIG. 7;
**FIG. 12** is an axonometric view of a reflecting assembly **10** with a different configuration of the movement means **40** with respect to the embodiment of FIG. 7;
**FIG. 13** is a lateral view of the reflecting assembly **10** of FIG. 12;

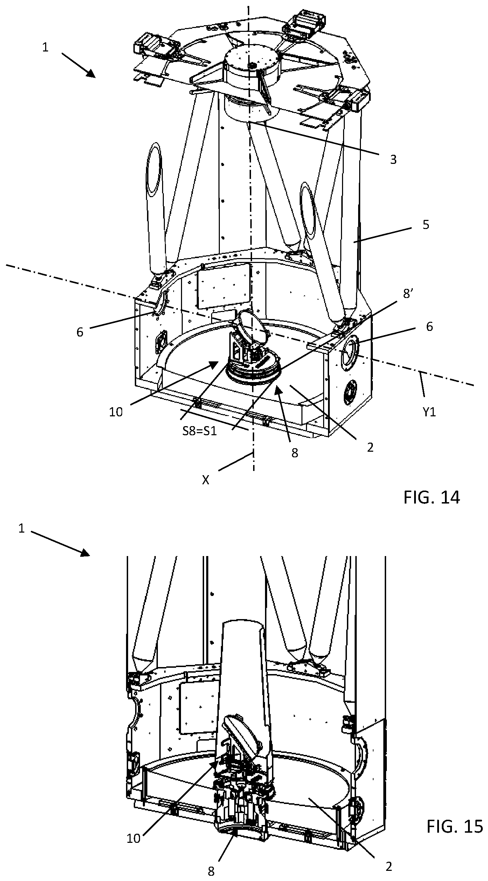

**FIG. 14** and **FIG. 15** are partially cross-sectional views of a telescope 1 with the reflecting assembly**10**.

### Detailed description of some preferred embodiments

With reference to the figures mentioned above, herein described is a telescope **1** of the reflecting type. Preferably, the reflecting telescope 1 may be obtained with *Ritchey-Chrétien* optics. On the other hand, although not described in the present document, the telescope **1** may be a different reflecting telescope. For example, it may be made with a so-called *Schmidt-Cassegrain, Newtonian, Dobsonian* optical scheme or other optical schemes of the per se known type.

The telescope **1** may be particularly adapted for use in the so-called laser communication. As a matter of fact, in such application, there arises the need to have a high degree of precision.

It is clear that the telescope **1** may be used for various activities. For example, it may be used for "observation".

Preferably, but not exclusively, the telescope **1** may be a reflecting telescope with *Ritchey-Chrétien* optics used for laser communication.

FIG. 1 shows a *Ritchey-Chrétien* optical scheme of the type known in the industry, which provides for a main mirror **M1,** a secondary mirror **M2** and a deviator mirror **M3** to deflect the rays laterally with respect to the main axis of the telescope. It is clear that the mirrors **M1** and **M2** may be coaxial along the main axis.

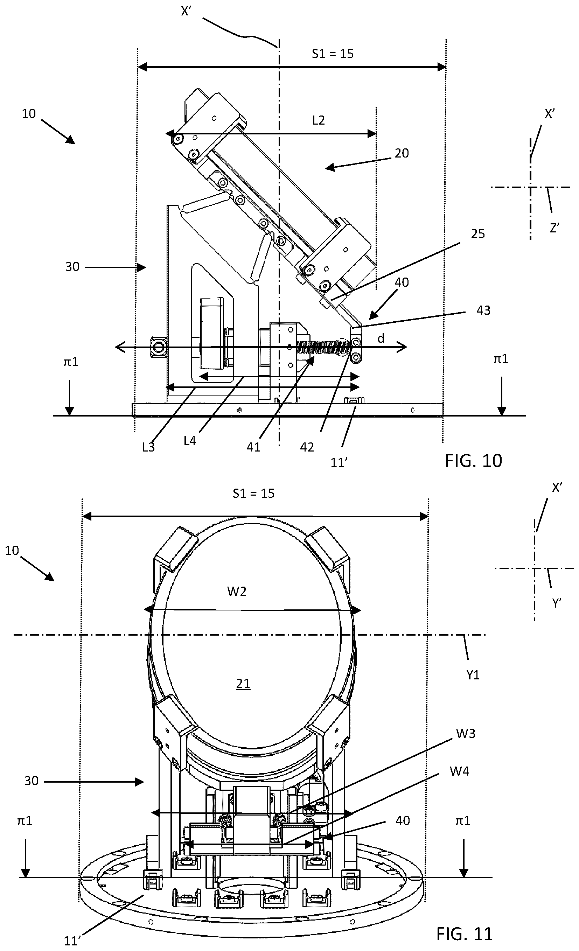

The telescope **1,** for example as shown in FIG. 11, may have the optical scheme shown in FIG. 1. In particular, the telescope **1** may comprise a main mirror **2** and a secondary mirror **3** aligned along the main axis **X.**

Suitably, there may be provided for a reflecting assembly **10** interposed between the mirrors **2** and **3** to deflect the rays coming from the latter mirror **3.**

Preferably, but not exclusively, the telescope **1** may comprise the primary mirror **2** having a diameter comprised between 20 cm and 150 cm.

The reflecting assembly **10** may comprise a mirror **20.** The reflecting assembly **10** may further comprise means **30** for supporting the mirror **20** as better explained below.

Suitably, there may be provided for further means for supporting and/or moving the reflecting assembly **10.** Such means may be of the per se known type. For example, FIG. 11 shows a base platform **8'** for supporting the reflecting assembly **10.**

The base platform **8'** may define a base plane **π** . Such plane **π** may be perpendicular to the axis **X.**

The reflecting assembly **10** may further comprise a base abutment element **11.** Such abutment element **11** may define a base plane **π1** perpendicular to the axis **X'.** The support structure **30** may be fixed to such abutment element **11** or it may include such abutment element **11.** In this manner, the support structure **30** may define a base plane **π1.**

Such configuration of the assembly **10** with the abutment element **11** is particularly advantageous given that it allows the easy movement of the assembly **10** alone. The latter will then be positioned in a telescope **1** above the mirror **2** by means of suitable anchoring means **8.**

In any case, the abutment element **11** may be configured to be integrally coupled by means of suitable anchoring means **8** with the mirror **2.**

The anchoring means may further be anchored to the mirror **2** or to the support structure **5** in a per se known manner. Such anchoring means may be of the type known in the industry and it may comprise various parts, including, for example, a rotor element.

Generally, advantageously, the anchoring means **8** may have lateral overall dimensions **S8** equal to or smaller than the lateral overall dimensions **S1** of the abutment element **11** or the lateral overall dimensions of the mirror **20** considered with respect to the base plane **π1** or the plane **π**'.

Preferably, the anchoring means **8** may have lateral overall dimensions **S8** similar to the overall dimensions **S1** of the abutment element **11.** Such aspect may facilitate the formation of a reduced shadow area **15,** as better explained below.

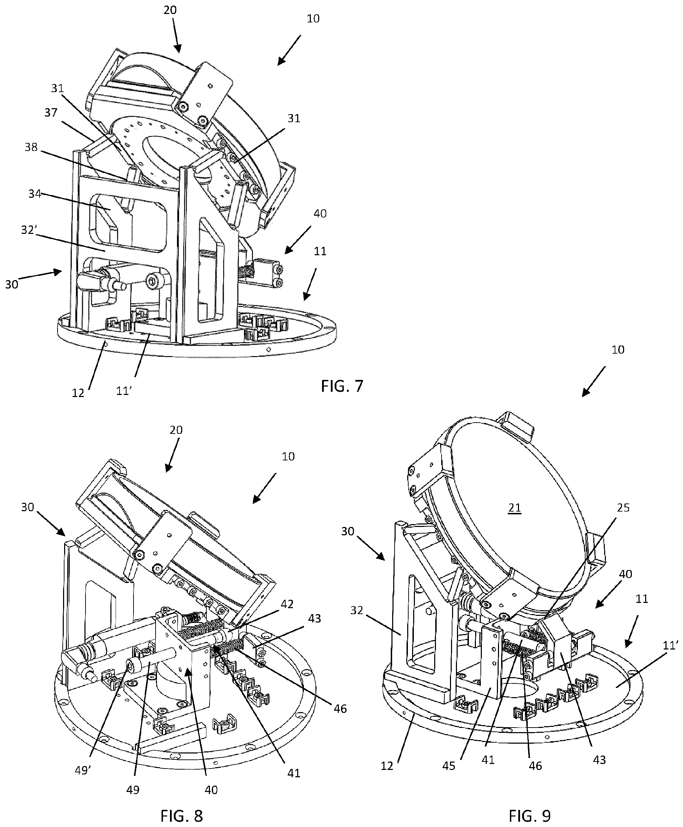

The abutment element **11** may for example be a circular plate **11',** for example as shown in FIG. 7. It is clear that such embodiment is not exclusive.

The anchoring means **8** may comprise a substantially planar platform **8'.**

Suitably, the platform **8'** may be rotating around an axis. Advantageously, once the plate **11'** has been anchored with the base platform **8',** the rotation of the latter may promote the rotation of the reflecting assembly **10** around its axis **X'.**

In use, the platform **8'** may be arranged so that the rotation axis thereof coincides with the axis **X.** For example, it may be anchored to the mirror **2** coaxially to the axis **X,** as shown in FIG. 11. Therefore, advantageously, the rotation of the platform **8'** may correspond to the rotation of the mirror **20** around the axis **X.**

Preferably, the base plate **11'** may be fixed to the platform **8'** in a per se known manner, for example by means of screws and bolts.

The plate **11'** and the platform **8'** may have substantially the same surface extension. For example they may be both circular-shaped. Therefore, the plate **11'** and the platform **8'** may substantially have the same lateral overall dimensions **S1 S8.** It is clear that such embodiment is not exclusive. The plate **11'** and the platform **8'** may be shaped differently.

For example, the abutment element **11** may be defined by a portion of the support structure **30.** In this case, the latter may be directly fixed to the base platform **8'.**

Although in the attached images there has been shown the abutment element **11** comprising a plate **11'** which can be anchored to a rotary platform **8',** it is clear that the abutment element **11** may be any element on which there is anchored the support structure **30.**

Possibly, the reflecting assembly **10** may comprise anchoring means **8.** In this case, advantageously, the reflecting assembly **10** may be a single device which may be anchored to the mirror **2.** Such configuration may be advantageous should there be required the installation and the removal from the telescope of the whole reflecting assembly **10** and anchoring means **8** set.

Possibly, the reflecting assembly **10** may comprise only a part of the anchoring means **8.** For example, it may comprise the plate **8** and the rotation mechanism thereof. The latter may be anchored to a special plate arranged at the mirror **2.**

The mirror **20** may preferably be a flat mirror. The mirror **20** may therefore define a reflecting plane **π'** as better explained below.

In use, the reflecting plane **π'** may intercept the rays coming from the mirror **3.** In particular, the reflecting plane **π'** may be transversal to the axis **X.** Preferably, the reflecting plane **π'** may be inclined with respect to the axis **X** by 45°. Therefore, the rays may be diverted along a direction precisely orthogonal to that of the axis **X.**

For example FIG. 11 shows a telescope **1** with the reflecting assembly **10** configured to deflect the rays along an axis **Y** perpendicular to the axis **X.**

Suitably, the telescope **1** may comprise a support structure **5** for the mirrors **2** and **3** and it may comprise at least one opening **6** at the reflecting assembly **10** to allow the through-passing of the rays, as shown in FIG. 11.

In order to allow an excellent adjustment of the telescope, the mirror **20** may rotate around the axis **X** and around a median axis **Y1.** Such axis **Y1** may lie on the reflecting plane **π'** and it may pass through and perpendicular to the axis **X.**

The reflecting assembly **10** may have an extension along a main axis **X'.** The reflecting plane **π'** may be substantially transversal to the axis **X'.**

Suitably, the support structure **30** may be coupled to the mirror **20** so as to allow the rotation of the mirror **20** around the axis **Y1.** In particular, such rotation may be obtained without the axis **Y1** varying the distance thereof from the base plane **π1.**

Thanks to this characteristic, upon rotation of the mirror **20** around the axis **Y1** the latter may prevent translation along the axis **Y** and/or **X** and therefore this may allow to keep the distance from the mirrors **2** and **3** unvaried.

In order to enable an excellent adjustment as described above, the reflecting assembly **10** may be configured to allow the rotation of the mirror **20** around the median axis **Y1.**

In greater detail, such rotary movement of the mirror **20,** that is the rotation of the plane **π'**, may be carried out so that the median axis **Y1** does not change the distance thereof from the mirrors **2** and **3** so as not to change the focal distances.

The mirror may have a reflecting operative face **21.** The latter may define the reflecting plane **π**'.

It is clear that the mirror **20** may be slightly concave without departing from the scope of protection of the present invention. In this case, the axis **Y1** may pass through the focal centre of the reflecting plane **π'** which may therefore be slightly concave or convex.

Furthermore, such rotation of the plane **π'** around **Y1** may be a so-called fine adjustment. As a matter of fact, the plane **π'** may rotate between a maximum position and a minimum position angularly spaced apart by 4°, preferably angularly spaced apart by 1°. In greater detail, once the reflecting assembly **10** has been positioned, the inclination of the plane **π'** may be varied with respect to an intermediate neutral position between +2° and - 2°, preferably between +0.5° and - 0.5°.

A particularly fine adjustment like in the case of ±0.5° with respect to the neutral position allows to adjust the angle of incidence of the plane **π'** with the axis **X** with very high precision and at the same time the reflecting assembly 10 may be particularly rigid. Such configuration may be particularly suitable in cases where there is required maximum precision and minimum tolerance.

On the other hand, a less fine adjustment like in the case of ±2° with respect to the neutral position may allow to obtain a telescope with greater tolerances, with corresponding greater adjustment range, with relative rigidity and therefore cost-effective.

The support structure **30,** better described below, may be configured to allow such rotation of the plane **π'** around **Y1.**

According to a particular aspect of the invention, as better described below, the support structure **30** may allow such fine adjustment and at the same time have minimum overall dimensions.

Thanks to this characteristic, the telescope may allow all the adjustments mentioned above and at the same time have minimum obscurement which corresponds to a high effectiveness of the telescope.

In use, the reflecting assembly **10** may define a shadow area **15** on the mirror **2.** The rays which generate such shadow area **15** may be substantially coaxial to the axis **X.** In other words, the lateral overall dimensions of the reflecting assembly **10,** that is the overall dimensions in the plane **π1**, may therefore define the extension of the area **15.**

The expression lateral overall dimensions is used to indicate the overall dimensions considered in the plane **π1** or in a parallel plane. Therefore, should there be considered a flat surface with extension in such plane of parallel thereto, the surface extension may define the lateral overall dimensions. For example, the lateral overall dimensions of the plate **11'** may be defined by the surface extension thereof. On the other hand, should an element have a transversal extension with respect to the plane **π1**, such as for example the mirror **20,** the lateral overall dimensions thereof will be the projection thereof into the plane **π1.**

Advantageously, thanks to the small dimensions of the support structure **30,** the maximum lateral overall dimensions of the reflecting assembly **10** may be given by the abutment element **11,** that is by the lateral overall dimensions **S1** of the latter, for example as schematically shown in FIG. 9 and/or FIG. 10.

Furthermore, still advantageously, the small dimensions of the support structure **30** may allow to use an abutment element **11** with small lateral overall dimensions **S1.** In this manner, also the area **15** may be small in size so as to reduce the obscurement of the mirror **2.**

According to a particular aspect of the invention, the support structure **30** may be configured so as not to protrude (that is so as to have lateral overall dimensions equal to or smaller ) than the abutment element **11.** In this manner, the support structure **30** may not affect the shadow area **15.**

Preferably, the support structure **30** may be configured so as not to protrude with respect to the mirror **20** considering the base plane **π1.**

In particular, preferably, the support structure **30** may have width-wise overall dimensions **W3,** that is along the axis **Y'** substantially equal to or smaller than the width-wise overall dimensions **W2** of the mirror **20,** for example as shown in FIG. 10.

Thanks to this characteristic, the support structure **30** may have minimum or zero effect with respect to the determination of the area **15.** In any case, they may have a zero effect considered along the axis **Y'**.

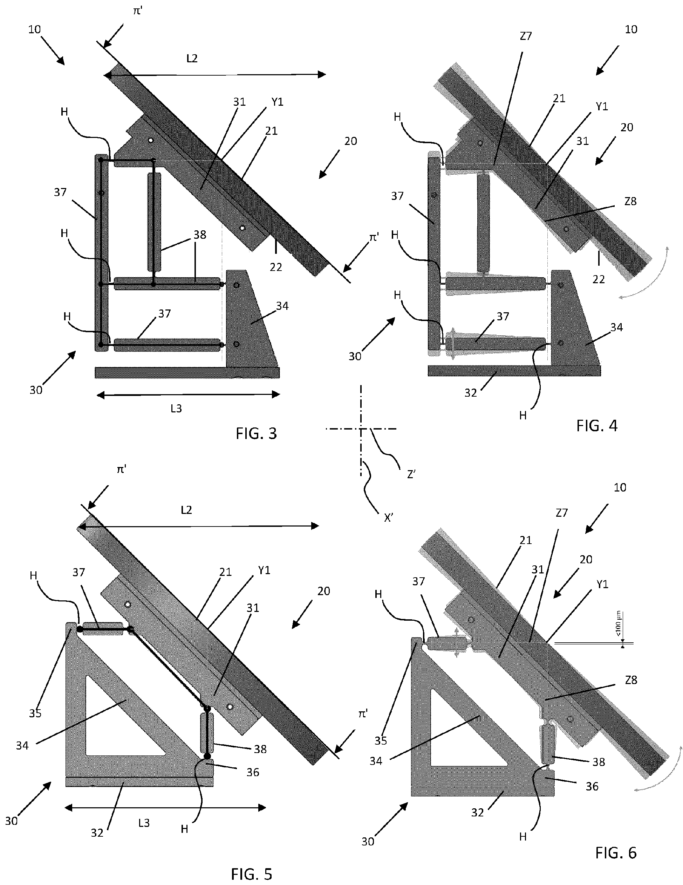

Possibly, the support structure **30** may have length-wise overall dimensions **L3,** that is along the axis **Z'** substantially equal to or smaller than the length-wise overall dimensions **L2** of the mirror **20,** as shown in FIG. 3 and FIG. 5.

Therefore, advantageously, the entire lateral overall dimensions (that is considered with respect to the base plane **π1**) of the support structure **30** may be substantially equal to or smaller than lateral overall dimensions of the mirror **20.**

Thanks to this characteristic, the support structure **30** may be entirely irrelevant in determining the dimensions of the area **15** given that the latter may be defined by the lateral overall dimensions of the mirror **20** and/or of the abutment element **11** therefore resulting in a reduced extension and, as a result, the obscurement of the mirror **2** will also be reduced.

In greater detail, should the shadow area **15** defined by the mirror **20,** the area **15** may be particularly small.

On the other hand, also should there be the abutment element **11,** the latter may define the area **15** and it may have lateral overall dimensions **S1** equal to or slightly larger than the overall dimensions of the mirror **20.**

Therefore, the area **15** may be particularly small. Generally, the area **15** of the reflecting assembly **10** of the present invention may have an extension smaller by at least 25% with respect to the area **15** of the prior art reflecting assemblies with the support structure **30** which exceeds the mirror.

For example, the reflecting assembly of the prior art shown in Fig. 2 has a support structure with width-wise overall dimensions that are significantly larger than the overall dimensions of the mirror, and as a result an abutment plate with large dimensions. The reflecting assembly **10** of the present invention with respect to the reflecting assembly **G3** of the prior art, considering a mirror **20** with a reflecting surface **21** measuring the same size, may have a plate **11'** having a surface **S1** that is smaller than the plate of the assembly **G3,** and as a result define a smaller shadow area **15.** For example, considering a mirror **20** with reflecting surface **21** measuring the same size, the plate **11'** may have a surface **S1** that is smaller by about 30% with respect to the surface of the plate used in the reflecting assemblies **G3** of the prior art.

Furthermore, as better described below, the structure **30** that is small in size may allow to form a space which can be used for other parts, such as motors, control units or the like without impacting against the shadow area **15.**

The assembly **10** may have an abutment element **11** in the form of a circular plate **11',** for example as shown in FIG. 10. In this case, once the reflecting assembly **10** has been positioned in the telescope, the dimensional limit of the area **15** may be defined by the lateral overall dimensions **S1** of the plate **11',** that is it may be delimited by the edge **12** of the plate **11'.**

The mirror **20** may be substantially circular shaped and it may have a face **22** opposite to the face **21.** Suitably, the support structure **30** may be fixed with the mirror **20** at the face **22.**

The support structure **30** may comprise at least one anchoring element **31** anchored to the face **22.** A pair of anchoring elements **31** may preferably be provided for.

The anchoring may be obtained in a per se known manner. For example by means of screws and bolts. For example, the element **31** may be a longitudinal bar with a plurality of through holes arranged at the corresponding holes in the face **22** of the mirror **21.**

The element **31** may have a length smaller than the width of the mirror **22** so that it does not protrude with respect thereto considered along the plane **π**'. Preferably, the element **31** may have a length, width and height so as not to protrude with respect to the mirror **22** considered along the plane **π1.**

The support structure **30** may have different configurations.

In the present document, the expression substantial absence of translation movement of the axis **Y1,** is used to indicate that the translation thereof is smaller than 100 µm.

For example, the support structure **30** may allow, when moving the mirror **20** rotatably around the axis **Y1,** a minimum movement of the latter, in the order of 100µm or less. While maintaining a good rigidity and good precision, such configuration allows to obtain a reflecting assembly **10** that is particularly simple and cost-effective.

An example of such configuration of the structure **30** is shown in Fig. 5 and FIG. 6. Essentially, such structure **30** may have a rigid structure **32.** The latter may be fixed to the plate **11.** In greater detail, the rigid structure **32** may have a base portion **33** designed to be fixed to the plate **11** and a rigid longitudinal element **34** inclined by 45° with respect to the base portion **32** so that once the structure **32** has been fixed to the plate **11,** the longitudinal element **34** is inclined by 45° with respect to the plane **π1.** The longitudinal element **34** may comprise a pair of end portions **35** and **36.**

The structure **30** may further comprise a pair of rigid connection elements **37** and **38.**

The structure **30** may further comprise at least one anchoring element **31** which may be anchored to the mirror **20,** preferably to the face **22** thereof.

The anchoring element **31** may be operatively connected with the end portions **35** and **36** of the rigid element **34** by means of the pair of rigid elements **37, 38.** In greater detail, the rigid element **37** may be coupled on the one hand with the portion **35** and on the other with the anchoring element **31** by means of hinges; and the rigid element **38** may be coupled on the one hand with the portion **36** and on the other with the anchoring element **31** by means of hinges.

Once coupled as described above, the connection hinges of the rigid elements **37** and **38** and they may define respective axes **X7** and **X8** perpendicular to each other and incident at the rotation axis **Y1.**

Therefore, once the mirror **20** has been moved, the latter will be guided in rotation by the structure **30** which, thanks to the mechanical constraints described above, may allow the rotation of the element **31** with respect to the structure **32** around the axis **Y1,** as shown in FIG. 6, and therefore of the reflecting plane **π'** around the rotation axis **Y1,** with a translation of the rotation axis **Y1** with respect to the structure **32** in the order of 100µm or less.

In order to confer particular rigidity along the axis **Y1,** the structure **30** may comprise a pair of structures **32,** rigid elements **37** and **38,** and anchoring elements **31** spaced along the axis **Y1.** There may preferably be provided for a rigid element **32'** for rigidly connecting the structures **32** in at least one area.

Advantageously, such configuration is particularly simple and requires a very small number of components.

Furthermore, the pair of structures **32** and the connection element or elements **32**'may consist of a single piece, for example as shown in FIG. 7, with a further simplification and reduction in costs of the support structure **30.**

On the other hand, for example as shown in FIG. 3 and FIG. 4, the support structure **30** may hold the rotation axis **Y1** stationary upon moving the mirror **20** in rotation around such axis **Y1.** Such configuration of the structure **30** is expensive and requires a relatively high number of pieces, but it allows to obtain high precision and rigidity.

Therein, there may be provided for a plurality of rigid elements **37, 38** interposed between the structure **32** and the anchoring element **31** to form a structure if the "double parallelogram" type. The rigid elements **37, 38** may all be connected to each other by means of hinges.

It is clear that the hinges for coupling with the structure **32** and the coupling hinges with the anchoring element **31** may lie in respective incident axes **X7** and **X8** at the rotation axis **Y1,** as schematically shown in FIG. 3.

Therefore, once the mirror **20** has been moved, the latter will be guided in rotation by the structure **30** which, thanks to the mechanical constraints described above, may allow only the rotation of the element **31** with respect to the structure **32** around the axis **Y1,** as shown in FIG. 4, and therefore of the reflecting plane **π'** around the rotation axis **Y1.**

For the sake of simplicity, in the schematic figures that is in FIG. 3, FIG. 4, FIG. 5 and FIG. 6, the hinges for connecting the rigid elements (**34, 37, 38, 31**) are indicated in the figures with **H.** The rigid elements, same case applying to the hinges, may be obtained in a per se known manner.

In particular, in FIG. 3 and FIG. 5 there are schematically shown the constraints with dots indicating the hinges **H** and the bold dashes indicating the rigid elements (**34, 37, 38**, **31**).

Preferably, the connection hinges **H** may be obtained by means of a small thickness rigid connection element, that is with thickness significantly smaller than the elements **34, 36, 38, 31,** as shown in FIG. 9.

In other words, weakening portions **H** may be present. In this manner, for small variation of angles (smaller than ±2° with respect to a neutral position), such weakening portions **H** may bend and therefore - basically - mechanically act as hinges.

In other words, thanks to this characteristic, the small-thickness rigid connections, that is the weakening portions **H,** may act as rigid constraints for rotation angles greater than ±2° and at the same time they may act as hinges for small rotation angles, that is smaller than ±2°.

Therefore, advantageously, the assembly **10** may at the same time be extremely rigid and extremely precise in rotation by small degrees. The degree of rotation may be adjusted by suitable movement means **40** better described hereinafter.

Furthermore, advantageously, such results may be achieved by the support structure **30** in a manner simple and cost-effective to obtain.

It is clear that the support structure **30** may have other configurations without departing from the scope of protection of the present invention.

According to a further aspect of the invention, there may be provided for movement means **40** for promoting and/or adjusting the rotary movement of the mirror **20,** preferably between a maximum and minimum position.

Advantageously, such means **40** may directly act on the mirror **20.**

Suitably, the means **40** may promote the movement of the mirror **20** and the support structure **30** may constrain the mirror **20** so that the latter may be free to move only rotatably with respect to the axis **Y1.**

The means **40** may further allow to adjust the angular position of the mirror **20** (that is the rotation) between the maximum and minimum position described above. Such adjustment shall be fine, like in the case of the ±2° adjustment or ultra fine like in the case of the ±0.5° adjustment.

The prior art movement systems provide for a pair of gripping heads arranged laterally to the mirror and aligned along the rotation axis as shown in FIG. 2. By rotating around themselves the heads promote the rotation of the mirror. Due to high precision required, the two gripping heads must therefore be synchronised and controlled with precision electronics and therefore necessarily driven by means of two electric motors. Being expensive and significantly heavy the latter jeopardise the transportability of the telescope.

Suitably, the adjustment means **40** may have lateral overall dimensions in the plane **π1** smaller than the overall dimensions **S1** of the plate **11.**

Preferably, the adjustment means **40** may have lateral overall dimensions in the plane **π1** smaller than the mirror **20.** The adjustment means **40** may have width-wise lateral overall dimensions **W4** that is along the axis **Y'** substantially equal to or smaller than width-wise overall dimensions **W2** of the mirror **20.** Suitably, also the length-wise overall dimensions **L4,** that is along the axis **Z',** may be substantially equal to or smaller than the length-wise overall dimensions **L2** of the mirror **20.**

Such characteristics of the adjustment means **40** relative to their lateral overall dimensions may have the same advantages described above for the support structure **30** in terms of non-effect on the shadow area **15** and as a result minimisation of the dimensions of the plate **11.**

As a matter of fact, as described above for the structure **30,** the width-wise maximum dimensions may be defined by the mirror **20,** and more generally, the width-wise overall dimensions may be defined by the mirror **20.** Should there be the plate **11',** the latter may have an extension slightly greater than the mirror **20** with a resulting minimisation of the area **15.**

Advantageously, thanks to the configuration of the support structure **30** which constrains the rotation of the mirror **20** with respect to the axis **Y1,** the means **40** may be simple linear actuators acting on the mirror **20.** In other words, the means **40** may comprise or consist of linear actuators. Preferably, the means **40** may comprise or consist of a single linear actuator.

In this manner, the adjustment means **40** which comprise or consist of linear actuators may be particularly simple, cost-effective and light. Such aspect is even more significant should the adjustment means **40** comprise or consist of a single linear actuator.

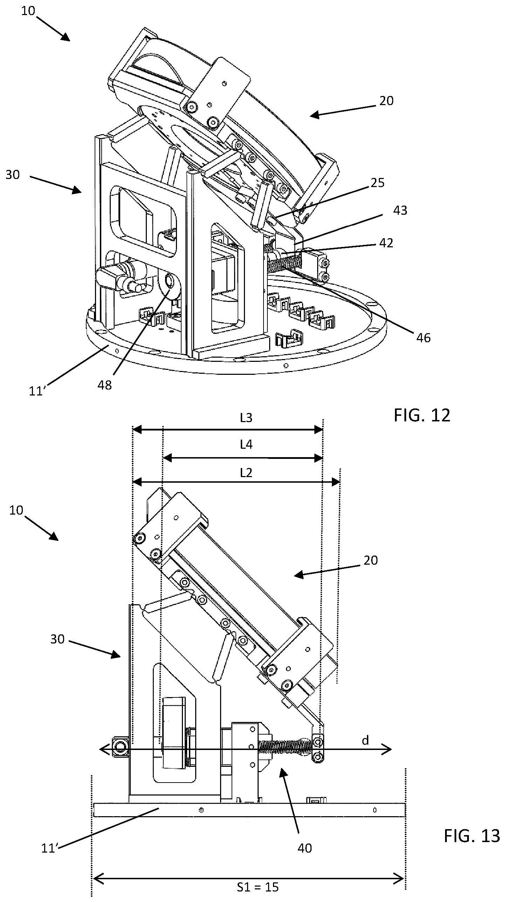

The linear actuators **40** may act along a direction **d,** as schematically shown in FIG. 9 and FIG. 12. The direction **d** may preferably be perpendicular to the rotation axis **Y1.** Preferably, the direction **d** may be parallel to or coincide with the axis **Z'.**

Furthermore, the linear actuators may have a longitudinal extension along the direction **d** and minimum overall dimensions perpendicularly to the direction **d** (that is width-wise overall dimensions). Such width-wise lateral overall dimensions **W4** of the actuators shall therefore be smaller than the width **W2** of the mirror **20.**

Such particularly small overall dimensions will allow to position, in the space at the lower part or at the rear of the mirror **20,** further parts such as logic units, motors, batteries or other parts of the known type in such applications.

Preferably, the length **L4** of the linear actuators **40** may be smaller than or equal to the length-wise overall dimensions **L2** of the mirror **20,** with the advantages described above.

The linear actuators **40** may comprise or consist of a slidable longitudinal element**41.** The latter may slide along the direction **d.**

The slidable longitudinal element **41** may be positioned at the lower part or at the rear of the mirror **20.**

The slidable longitudinal element **41** may be connected with the mirror **20.** For example, there may be provided for a connection element **43** to allow the rotation of the mirror upon the advancement and recession of the slidable longitudinal element **41.** Such connection element **43** may for example comprise one or more hinges in a per se known manner.

Suitably, the slidable longitudinal element **41** may be connected to an area **25** of the mirror, preferably to a peripheral area of the mirror **20** and more preferably to the lower peripheral area **25,** that is the one at the axis **Z'.** Such connection may preferably be obtained with the element **43.**

In other words, the element **43** may be connected to the end **42** of the slidable longitudinal element **41** and to the lower peripheral area **25** of the mirror **20.**

In the light of the above, the mirror **20** may be moved by acting on a single area thereof. Furthermore, preferably, there may be used a single linear actuator, for example a single slidable longitudinal element **41,** by acting on a single area **25** of the mirror **20.** As described above, the means **30** may ensure that the movement promoted by the means **40** promotes a rotation with respect to the axis **Y1.**

This will allow to ensure the correct movement and at the same time avoid the use of synchronisation means required when acting on several areas of the mirror by means of multiple actuators.

Furthermore, the linear actuator may be extremely precise and easy to control in the movement thereof along the direction **d.**

Suitably, the means **40** may comprise an operative portion **44** fixed with the abutment element **11,** for example with the plate **11.** Such fixing may be of the known type and it may, for example, be obtained by means of a bracket **45.**

It is clear that the bracket **45** may be equally fixed to the structure **32** or it may be part thereof without departing from the scope of protection of the present invention.

The movement means **40** may be of the automatic type, and they may comprise drive means and control means in a per se known manner, or they may be of the manual type.

Should the adjustment means **40** be of the manual type, the latter may be actuated by an operator.

This may allow for a high adjustment precision and at the same time the weight and overall dimensions of the means **40** may be minimal. In any case, the weight and the overall dimensions may be smaller than the automatic means **40** provided with motor.

Should the means **40** comprise or consist of a manual linear actuator, the movement of the latter may be particularly simple. The assembly **10** may therefore allow a fine adjustment and at the same time it may have a maximisation in terms of simplicity, cost-effectiveness, lightness and overall dimensions.

For example, in this case, the slidable longitudinal element **41** may comprise or consist of a grub screw or a screw, for example as shown in FIG. 8. In particular, the screw **49** may comprise a head **49'** accessible to the operator to allow to intervene if need be even when the assembly **10** is mounted in the telescope **1.**

On the other hand, the movement means **40** may be of the automatic type. In this case, there may be obtained the advantages of automatic control and at the same time there may be obtained small overall dimensions width-wise, with the advantages described above.

Preferably, the movement means **40** may be linear actuators which may be actuated, for example, by an electric motor. For example as shown in FIG.12.

Even if automatic, the linear actuators **40** may be significantly more cost effective and lighter compared to those of the prior art described above. As a matter of fact, the automatic linear actuators **40** require a small electric motor to drive the sliding of the linear actuator. For example, the electric motor may be arranged at the lower part or at the rear of the mirror **20.**

Therefore, the assembly **10** may have the advantages of automatic adjustment and be equally light and therefore easy to transport. The use of two motors which work in rotation and the synchronisation means like in the prior art (FIG. 2) entail a significant increase in weight, besides the dimensions.

The means **40** may therefore be without peripheral rotary elements (and motors) fixed at the peripheral edge of the mirror externally thereto which would increase its width-wise lateral overall dimensions and weight.

For example, the linear actuator means **41** may comprise or consist of a telescopic piston **48.** A example of such embodiment is shown in FIG. 12 and FIG. 13. The piston **48** may operate similarly to the screw **49** described above, except for the automatic actuation, that is by using an electric motor or pneumatic control.

Possibly, both in the manual configuration (for example with the screw) and in the automatic configuration (for example with the telescopic piston) there may be provided counteracting springs **46** in a per se known manner to improve the fine adjustment and/or the action of the operator.

The reflecting assembly **10** of FIG. 7 and the reflecting assembly **10** of FIG. 12 differ by the type of linear actuator **41.** Therefore, the two embodiments will have the same overall dimensions of the support structure **30.** The overall dimensions of the linear actuators **41** may be slightly different depending on whether there is used a screw **49** or piston **48.** However, in both cases, the width **W4** may be much smaller than the width **W2** of the mirror. Furthermore, also the length **L4** may be smaller than the length **L2,** for example as shown in FIG. 10 and FIG. 13.

Preferably, the support structure **30** may include the adjustment means **40.** In other words, the support structure **30** and the means **40** may cooperate both to support in position the mirror **20** and drive the latter in rotation.

Furthermore, both the scheme of the support structure **30** of FIG. 3 and that of FIG. 5 have width-wise **W3** and length-wise **L3** overall dimensions substantially equal to those of the mirror **20.** Therefore, although FIG. 7 and FIG. 12 show an assembly **10** with the scheme of FIG. 5, an assembly **10** with the scheme of FIG. 3 may have the same characteristics in terms of overall dimensions and therefore the same advantages described above.

The present invention may include various parts and/or similar or identical elements. Unless otherwise specified, similar or identical parts and/or elements will be indicated using a single reference number, it being clear that the described technical characteristics are common to all similar or identical parts and/or elements.

The invention is susceptible to numerous modifications and variants, all falling within the scope of protection of the attached claims. All details can be replaced by other technically equivalent elements, and the materials can be different depending on the needs, without departing from the scope of protection of the invention defined by the attached claims.

## Claims

1. A reflecting assembly which can be used in a reflecting telescope comprising a primary mirror (**2**) and a secondary mirror (**3**) spaced apart and substantially coaxial along a first optical axis (**X**), the reflecting assembly being designed to be arranged between the primary mirror (**2**) and the secondary mirror (**3**) to deflect the rays coming from the latter along a second axis (**Y**) substantially perpendicular to the first optical axis (**X**),
the reflecting assembly having an extension along a second main axis (**X'**) and being designed to be anchored to the primary mirror (**2**) so that said second main axis (**X'**) is coaxial with said first optical axis (**X**);
wherein the reflecting assembly (**10**) comprises:
- a flat mirror (**20**) defining a reflecting plane (**π'**) designed to remain transversal to the third main axis (**X**') to intercept the rays coming from the secondary mirror (**2**);
- a structure (**30**) to support said flat mirror (**20**) designed to be anchored to the primary mirror (**2**);
wherein said mirror (**20**) has a flat circular-shaped reflecting upper face (**21**), the latter defining said reflecting plane (**π'**), there being provided for a fourth median axis (**Y1**) passing through the centre of said upper face (**21**) and designed to remain in use perpendicular to said third main axis (**X**') said support structure (**30**) being configured to allow the rotation of said reflecting plane (**π'**) with respect to said fourth median axis (**Y1**).

2. Reflecting assembly according to claim 1, wherein said support structure (**30**) has a first width (**W3**) and said mirror (**20**) having a second width (**W2**) along a fifth axis (**Y'**) parallel to a base plane (**π1**) substantially perpendicular to said second main axis (**X'**), said first width (**W3**) being substantially equal to or smaller than said second width (**W2**).

3. Reflecting assembly according to claim 2, wherein said support structure (**30**) has a first length (**L3**) and said mirror (**20**) has a second length (**L2**) along a sixth axis (**Z**') parallel to said base plane (**π1**), said first length (**L3**) being substantially equal to or smaller than said second length (**L2**).

4. Reflecting assembly according to any one of the preceding claims, wherein said flat mirror (**20**) has a second operative face (**22**) opposite to said first reflecting face (**21**), said support structure (**30**) has at least one anchoring element (**31**) anchored with said second operative face (**22**) of said flat mirror (**20**), said at least one anchoring element (**31**) having dimensions smaller than the area of said second operative face (**22**) so as not to protrude with respect to said first reflecting plane (**π'**).

5. Reflecting assembly according to any one of the preceding claims, wherein said support structure (**30**) comprises movement means (**40**) acting on said mirror (**20**) to promote the rotation of said reflecting assembly (**π'**) between a maximum position and a minimum position.

6. Reflecting assembly according to the preceding claim, wherein said movement means (**40**) have a third width (**W4**) smaller than said second width (**W2**) of said mirror (**20**).

7. Reflecting assembly according to claim 5 or 6, wherein said movement means (**40**) have a third length (**L4**) substantially equal to or smaller than said second length (**L2**) of said mirror (**20**).

8. Reflecting assembly according to claim 5 or 6 or 7, wherein said movement means (**40**) comprise a linear actuator (**40**) slidable along a sliding direction (**d**), the sliding of said linear actuator (**40**) promoting the rotation of said mirror (**20**).

9. Reflecting assembly according to the preceding claim, wherein said movement means (**40**) comprise a single linear actuator (**40**), the latter being connected with an area (**25**) of said mirror (**20**), are further provided with a connection element (**43**) to connect said single linear actuator (**40**) with said mirror (**20**) so that the advancement of said linear actuator (**40**) along said sliding direction (**d**) correspond to the rotation of said mirror (**20**).

10. Reflecting assembly according to claim 5, 6, 7, 8 or 9, wherein said movement means (**40**) are automatic and comprise drive means.

11. Reflecting assembly according to any one of the preceding claims, comprising an abutment element (**11**) defining a base plane (**π1**) substantially perpendicular to said third main axis (**X**'), said abutment element (**11**) being designed in use to be anchored with the primary mirror (**2**) so that said base plane (**π1**) is substantially perpendicular to the first optical axis (**X**), said abutment element (**11**) having length-wise overall dimensions along said fifth axis (**Y'**) equal to or slightly larger than the width-wise overall dimensions (**W2**) of said mirror (**20**).

12. Reflecting assembly according to the preceding claim, wherein said abutment element (**11**) is a circular plate.

13. Reflecting assembly according to claim 11 or 12, comprising anchoring means (**8**) for anchoring said abutment element (**11**) with the primary mirror (**2**), said anchoring means having lateral overall dimensions along said base plane (**π1**) equal to or smaller than the lateral overall dimensions of said abutment element (**11**).

14. A reflecting telescope which can be used for laser communication comprising a primary mirror (**2**) and a secondary mirror (**3**) spaced apart and substantially coaxial along a first optical axis (**X**), the telescope further comprising a reflecting assembly (**10**) according to any one of the preceding claims interposed along said first optical axis (**X**) between the primary (**2**) and secondary (**3**) mirror for intercepting the rays coming from the latter.

15. Use of a reflecting assembly (**10**) according to any one of claims 1 to 13 in a reflecting telescope for laser communication.
